(19) Europäisches Patentamt
European Patent Office
Office européen des brevets

(11) **EP 2 085 745 B1**

(12) **EUROPEAN PATENT SPECIFICATION**

(45) Date of publication and mention
of the grant of the patent:
**03.08.2016 Bulletin 2016/31**

(51) Int Cl.:
***G01B 21/20*** *(2006.01)*      ***B29D 30/60*** *(2006.01)*
***G01M 17/02*** *(2006.01)*

(21) Application number: **07829466.7**

(86) International application number:
**PCT/JP2007/069728**

(22) Date of filing: **10.10.2007**

(87) International publication number:
**WO 2008/062609 (29.05.2008 Gazette 2008/22)**

(54) **METHOD FOR MEASURING TIRE, DEVICE FOR MEASURING TIRE, AND TIRE-MOLDING DEVICE**

VERFAHREN ZUR REIFENMESSUNG, EINRICHTUNG ZUR REIFENMESSUNG UND
REIFENFORMUNGSEINRICHTUNG

PROCÉDÉ POUR MESURER UN PNEU, DISPOSITIF POUR MESURER UN PNEU, ET DISPOSITIF
DE MOULAGE DE PNEU

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **20.11.2006 JP 2006313422**

(43) Date of publication of application:
**05.08.2009 Bulletin 2009/32**

(73) Proprietor: **Bridgestone Corporation
Tokyo 104-8340 (JP)**

(72) Inventor: **OGAWA, Yuichiro
Kodaira-shi
Tokyo 187-8531 (JP)**

(74) Representative: **Oxley, Robin John George et al
Marks & Clerk LLP
90 Long Acre
London WC2E 9RA (GB)**

(56) References cited:
JP-A- 10 071 816       JP-A- 57 167 239
JP-A- 60 230 835       JP-A- 2004 299 184
JP-A- 2004 299 184     JP-A- 2004 354 259
JP-A- 2005 233 906

## Description

Technical Field

The present invention relates to a method for measuring a tire in which a profile of a tire built by wrapping a rubber strip is measured in a process of wrapping the rubber strip around a tire building drum, to a tire measuring device, and to a tire building apparatus.

Background Art

In tire building, an unvulcanized rubber strip continuously fed from an extruder or an injection molding machine is wrapped around a building drum and is bonded by a bonding roller in a layered structure. Thus, tire components are directly formed on the building drum to produce a tire.

In this tire building apparatus, for example, the extruder is mounted on a traverse unit, and, in synchronization with the rotation of the tire building drum, the traverse unit is reciprocated in the width direction thereof. The rubber strip fed from the extruder is wrapped in a predetermined shape by making the extrusion speed of the rubber strip equal to the surface speed of the tire building drum or by controlling the tension, for example. The extruded rubber strip is bonded to the already wrapped rubber strip by the bonding roller, and air between the bonded rubber strips is removed by a stitching roller. Thus, a green tire is built.

When different tires are built using a tire building apparatus, setting of the feed pitch of the traverse unit is needed so as to correspond to the different profiles of tires. However, if the setting is inappropriate or if the tire building apparatus does not operate according to the setting, an intended profile cannot be obtained. Thus, a tire having a regular profile may not be built.

Therefore, in the conventional tire building process, to determine whether or not the building is successful, the profile of the formed tire is measured by an image measurement method (light section) or by scanning a laser displacement sensor or the like in the cross-sectional direction after the rubber strip is wrapped. Thus, whether or not the building is successful is determined. JP 2004-299184 discloses a tire measuring device.

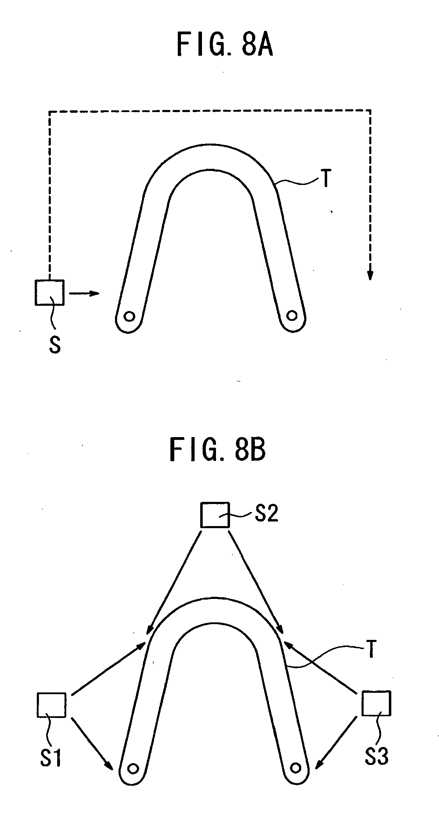

FIGS. 8 are diagrams for explaining an overview of a conventional method for measuring the shape of a green tire using a laser displacement sensor (laser displacement gauge) S. For example, as shown in FIG. 8A, the laser distance meter (laser displacement sensor) S is moved around a formed green tire T to perform measurement. Alternatively, as shown in FIG. 8B, the circumference of the green tire T is measured with, for example, three laser distance meters S1 to S3 disposed at fixed positions, and the output data are combined together to measure the profile.

However, these methods have a problem in that, because the profile is measured after the green tire is built, the time required for the tire building process including the measurement time increases. There is also a problem in that, if the sensor is disposed as a device separate from the tire building apparatus, the space therefor is necessary.

Furthermore, in wrapping molding, because the rubber strip is wrapped while being reciprocated in the width direction (axial direction) of the tire building drum, the profile has to be measured not only in the width direction, but also in the circumferential direction (rotation direction). Thus, not only that the measurement itself is time consuming, but also that, because the measurement is performed after building, whether or not the building is successful cannot be known during wrapping, and sometimes the tire is determined to be defective after the tire is built. This results in a problem in that the material and processing time having been consumed are wasted.

To overcome these problems, in a building apparatus including a tire building drum and a rubber-strip feeder mounted on a traverse unit that reciprocates in the width direction of the tire building drum, a profile measuring device having a displacement sensor that moves with the rubber-strip feeder is proposed. By processing data input from the displacement sensor in real-time, the profile formed by wrapping the rubber strip is measured and whether or not the building is successful is determined (refer to Patent Document 1).

The profile measuring device includes the displacement sensor that is disposed near a feeding port of the rubber-strip feeder and measures the displacement of the rubber strip immediately after being wrapped, a rotational position sensor that detects the rotational position of the tire building drum, a traverse position detection sensor that is disposed in the traverse unit and detects the traverse position of the displacement sensor, and profile calculation means to which the measured displacement, the rotational position, and the traverse position are input and which calculates a measuring position on the tire building drum from the rotational position and the traverse position and calculates the profile of the formed rubber strip from the measuring position and the measured displacement.

However, in this measuring device, because the sensors are mounted on the traverse unit that reciprocates in the width direction of the tire building drum, the traveling direction of the sensors is limited to the traverse direction, i.e., the X-axis direction. Therefore, this measuring device measures the tire to be formed only in the width direction, and cannot measure the side surfaces thereof.

That is, it is impossible for this measuring device to measure a portion at a certain distance from the laser displacement gauge being used, and, due to the principle of reflection of the laser displacement gauge, it is impossible to perform measurement unless the gradient of an end surface is ± 45°. Therefore, even if the measuring device is moved along the tire in the traverse direction, the side surfaces of the tire cannot be measured.

[Patent Document 1] Japanese Unexamined Patent Application, Publication No. 2004-299184

Disclosure of Invention

Problems to be Solved by the Invention

The present invention has been made to solve the above-described conventional problems, and an object thereof is to enable a tire building apparatus having a ribbon-rubber extruder to simultaneously build and measure the profile of the entire surface including the side surfaces of a tire.

Means for Solving the Problems

According to a first aspect of the invention, a method for measuring a tire as recited in claim 1 includes the steps of measuring a surface of the tire formed by laminating a rubber strip on a building support, and correcting the resulting measurement data according to a difference between a laminating position and a measuring position on the building support. Estimated tire surface data at the laminating position is obtained from the corrected measurement data.

According to the invention, in the method for measuring a tire, the measurement is performed along the entire surface of the tire.

According to the invention, in the method for measuring a tire, the measurement is performed while the rubber strip is laminated.

According to an of the invention, a tire measuring device as recited in claim 3 includes displacement measuring means that measures a surface of a tire formed by laminating a rubber strip on a building support, and correction means that corrects the measurement data measured by the displacement measuring means according to a difference between a laminating position on the tire building support and a measuring position of the measuring device. Estimated surface shape data of the tire at the laminating position is obtained according to the corrected measurement data.

According to an aspect of the invention, the tire measuring device according to the invention further includes means for determining whether or not the estimated surface shape data of the tire is appropriate by comparing the data with preliminarily stored normal tire surface data.

According to an aspect of the invention, in the tire measuring device according to the invention, the measuring means is a laser displacement gauge.

According to an aspect of the invention, the tire measuring device according to the invention is provided in a rubber-strip laminating device.

(Operation)

The measuring device is enabled to move in a plane and to rotate in the same plane (orientation change), i.e., triaxial movement, along with the bonding apparatus. The triaxial movement enables the measuring device to change the position and orientation to measure the entire surface of the tire. Furthermore, while a rubber strip is laminated and bonded to the building drum, the shape of the bonded rubber strip can be measured. Moreover, a measurement error due to difference in position of the measuring device and the bonding apparatus is corrected, and data corresponding to the profile of the tire at the position where the rubber strip is bonded are obtained. By comparing the data with preliminarily stored data, for example, whether or not the profile of the tire is appropriate is determined. Advantages

The measuring device of the present invention is mounted on the laminating apparatus capable of moving in a plane and rotating in the same plane (orientation change), i.e., triaxial movement. Thus, the entire surface of the tire including the side surfaces can be measured while the rubber strip is laminated, without requiring a special driving unit or an extra space for the measuring device. In addition, because the tire can be precisely measured with respect to the overall profile while being built, whether the data is good or bad can be determined with a higher accuracy. Thus, the occurrence of defective products can be more assuredly prevented.

Brief Description of Drawings

[FIG. 1] FIG. 1 is a schematic perspective view of a tire building apparatus having a sensor for measuring a profile of a green tire, according to an embodiment of the present invention.

[FIG. 2] FIG. 2A is an enlarged transverse sectional view of a bonding roller of the tire building apparatus 1 shown in FIG. 1 and a part of a tire, and FIG. 2B is a horizontal sectional view of FIG. 2A.

[FIG. 3] FIG. 3A is a perspective view showing a section plane P1 passing through the center of the tire and a section plane P2 at the height of a laser displacement gauge 10, and FIG. 3B is a diagram showing an actual outer circumferential shape $T_R$ and estimated data $T_I$ of the laser displacement gauge when the tire shown in FIG. 3A is viewed from above, projected on an X-Y plane.

[FIG. 4] FIG. 4 is an enlarged longitudinal sectional view of the bonding roller, the laser displacement gauge, and a part of the tire T.

[FIG. 5] FIG. 5 is a plan view showing the positional relationship between the laser displacement gauge and the tire T in the X-Y plane.

[FIG. 6] FIG. 6 is a schematic block diagram showing an example of a control unit.

[FIG. 7] FIGS. 7 are diagrams for explaining tire measurement according to this embodiment.

[FIG. 8] FIGS. 8 are diagrams for explaining a method for measuring the shape of the green tire using the laser distance meter (laser displacement gauge).

Reference Numerals

1: tire building apparatus, 2: tire building drum, 3: bonding roller, 5: first movable base, 7: second movable base, 9: support rod, 10: laser displacement gauge, 20: control unit, 22: CPU, 24: storage means, and M1, M2: stepping motor.

Best Mode for Carrying Out the Invention

A measuring device according to an embodiment of the present invention will be described with reference to the drawings.

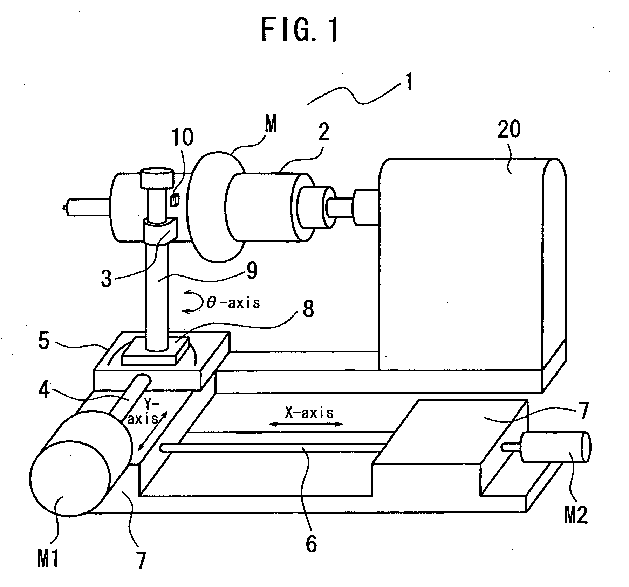

FIG. 1 is a schematic perspective view of a tire building apparatus having a sensor for measuring a profile of a green tire, according to an embodiment of the present invention.

A tire building apparatus 1 includes a bonding roller 3, which is an embodiment of a laminating apparatus, for spirally wrapping and laminating a rubber strip M around a building drum 2 consisting of a cylindrical body, which is an embodiment of a building support. The bonding roller 3 is formed as a part of a conventional rubber strip extruder (not shown) having a rubber-strip extruding nozzle.

The tire building apparatus 1 includes a first movable base 5 that can be moved in a direction toward and away from a building drum 2 (Y-axis direction) by driving means 4 consisting of, for example, a screw rod and a ball screw (a rack and pinion or a cylinder and piston mechanism is also possible), driven by a stepping motor M1. The first movable base 5 is attached to a second movable base 7 that can be moved by driving means 6 driven by a stepping motor M2, similarly to the first movable base 5, in a direction perpendicular to the first movable base 5, i.e., a direction parallel to the main axis of the building drum 2 (X-axis direction) so that it can be moved along with the movable base 7.

A support rod 9 for supporting the bonding roller 3 is attached to a swing base 8 on the first movable base 5, which can swing through a predetermined angle by appropriate driving means (not shown) (for example, a gear mechanism, a cylinder and piston mechanism, and the like).

Accordingly, the bonding roller 3 can be moved in the main axial direction of the building drum 2 (X-axis direction) and in the direction toward and away from the drum 2 (Y-axis direction) by the first and second movable bases 5 and 7, and can swing about a swing shaft (Z-axis) perpendicular to the X-axis and the Y-axis, i.e., the support rod 9.

In this embodiment, a laser displacement gauge 10 for measuring the profile of a tire to be formed is attached at a position vertically above the bonding roller 3 such that it moves with the bonding roller 3. Therefore, the laser displacement gauge 10 is also movable in the axial direction of the building drum 2 (X direction) and the direction toward and away from the drum 1 (Y direction), and can swing in the X-Y plane by the swing of the support rod 9. In other words, the laser displacement gauge 10 moves in the front-rear and left-right directions and swings in synchronization with the bonding roller 3 to measure the entire profile of the green tire T formed by spirally wrapping and laminating a rubber strip around the building drum 2.

Thus, in this embodiment, the extruder extrudes a rubber strip while moving along the main axis of the building drum 2. The bonding roller 3 rolls the rubber strip to spirally wrap the rubber strip around the building drum 2. At this time, the laser displacement gauge 10, while repeatedly moving and rotating in the X-Y plane with the bonding roller 3 with respect to the building drum 2, emits a laser beam onto the surface of a tire being built and receives a reflected wave to constantly measure the distance to the tire surface and sends the data to the control unit (not shown).

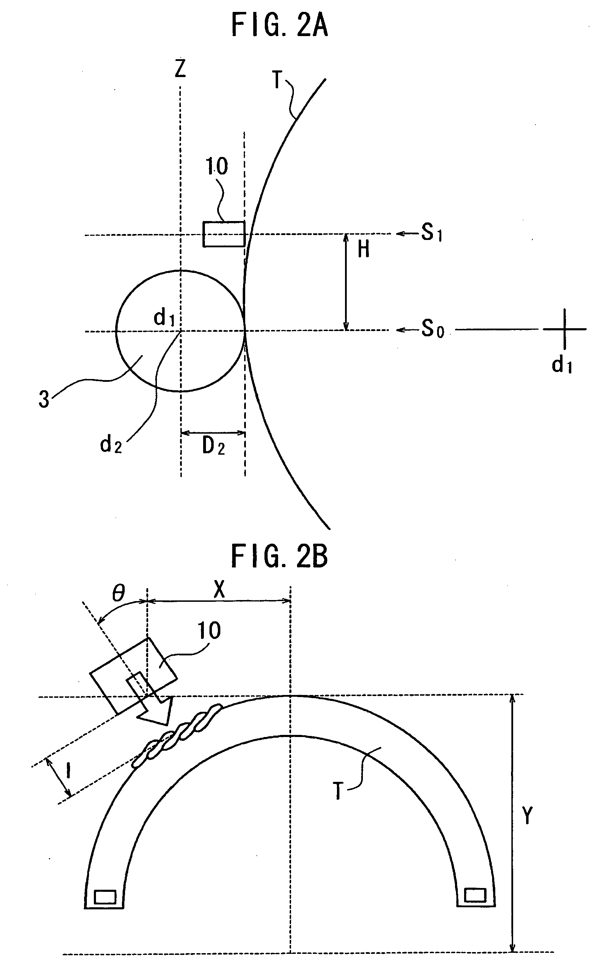

FIG. 2A is an enlarged transverse sectional view of a bonding roller of the tire building apparatus 1 shown in FIG. 1 and a part of a tire, and FIG. 2B is a horizontal sectional view of FIG. 2A. As shown, the axis of the bonding roller 3 and the axis of the tire are positioned at the same level, i.e., the same height, and the laser displacement gauge 10 is integrally attached to the bonding roller 3 at a position above the common horizontal plane by a height H. A laser-emitting position of the laser displacement gauge 10 is set to a position at a distance equal to a radius $D_2$ of the bonding roller 3 from the perpendicular line (Z-axis) passing through the center d1 of the bonding roller 3. That is, their ends adjacent to the tire are located at the same position in the Y-axis direction.

As shown in FIG. 2B, the laser displacement gauge 10 is located at a distance I from the surface of the tire T in the direction of the laser beam and is rotated about the Z-axis (rotation axis) by an angle $\theta$ so as to form a right angle with respect to the arcuate surface of the tire (more precisely, the tangent line of the arc).

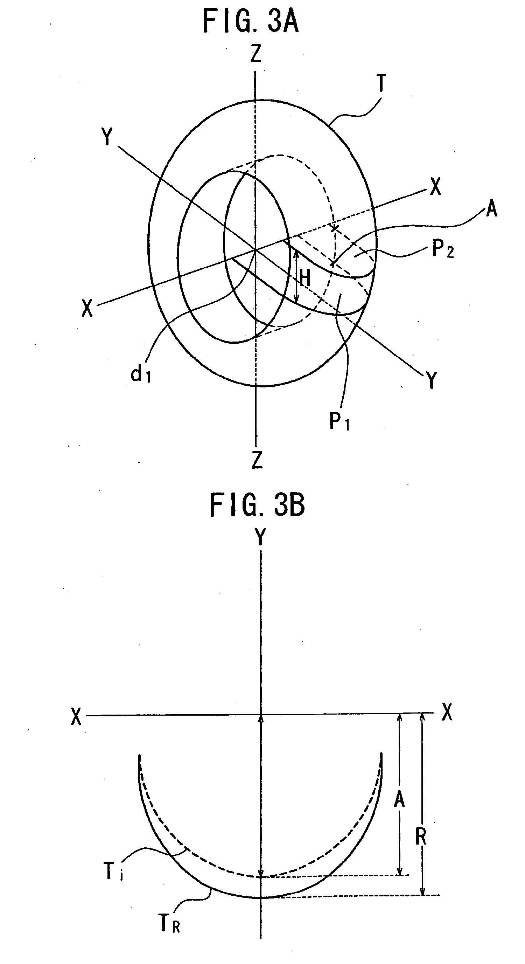

FIG. 3A is a perspective view showing a section plane P1 passing through the center of the tire T and a section plane P2 passing through the measuring position of the laser displacement gauge 10.

That is, P1 shows a cross section of the tire T horizontally cut in the plane passing through the center d1, i.e., a cross section at the maximum diameter, and P2 shows a cross section including a portion measured by the laser displacement gauge 10.

FIG. 3B is a diagram showing an actual outer circumferential shape $T_R$ of the tire shown in FIG. 3A and an outer circumferential shape $T_i$ obtained from the measurement data of the laser displacement gauge 10, viewed from above and projected on the X-Y plane. The shape of the tire T measured by the laser displacement gauge 10 is shown by a dotted line, and the true shape is shown by a solid line. As is clear from this diagram, as shown in FIG. 3A, the outer circumferential shape obtained from the measurement data of the laser displacement gauge 10 is smaller than the actual cross section of the tire T with respect to the Y coordinate. Therefore, to estimate the true cross-sectional shape from the data, correction in the tire radius direction, i.e., with respect to the Y coordinate, is necessary. Since the tire is a rotating body, the positions corresponding to the bonding roller 3 and the laser displacement gauge 10 in the X coordinate are the same.

A correction method will be described below.

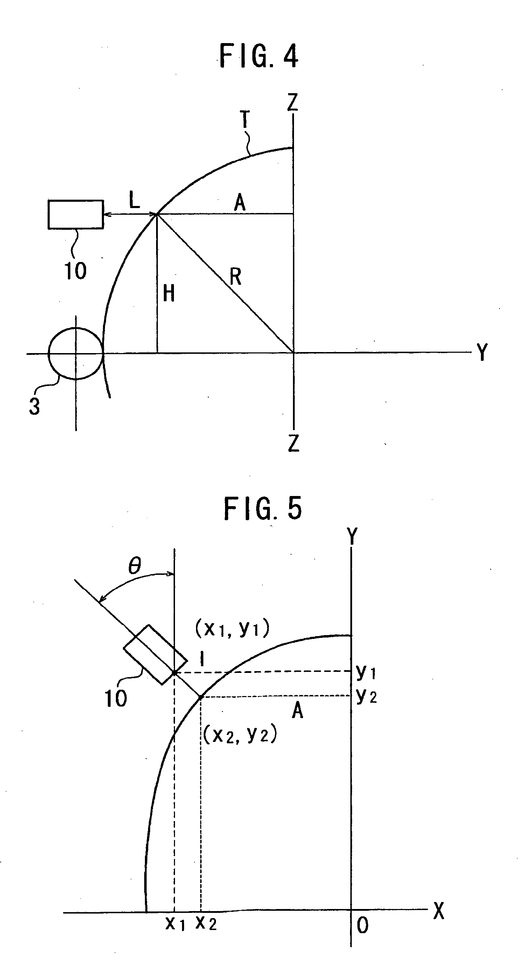

FIG. 4 is an enlarged longitudinal sectional view of the bonding roller 3, the laser displacement gauge 10 in FIG. 1, and a part of the tire T.

(1) Correction to the Height H

As shown in FIG. 4, where R represents the radius at a position where the bonding roller 3 comes into contact with the tire, i.e., the outer circumference of the tire, H represents the difference in height (in the top-bottom direction) between the laser displacement gauge 10 and the bonding roller 3, and A represents the dimension of the tire in the horizontal direction cut along the measurement plane of the laser displacement gauge 10, i.e., the length of a line extending from the measurement point at the outer circumference of the tire to the Z-axis extending through the center of the outer circumference of the tire, the following relationship holds:

$$R^2 = A^2 + H^2$$

Although the bonding roller 3 comes into contact with the tire at a position where the tire has the greatest diameter such that the roller surface and the tire constantly form a right angle and moves along the X-axis and the Y-axis, the external shape of the tire is measured at a position distant from the contact position in the vertical direction by the height H. Therefore, the dimension of the measured tire, i.e., the dimension A of the tire in the horizontal direction cut along the measurement plane of the laser displacement gauge 10, is smaller than the actual laminated dimension by A/R. Accordingly, the actual dimension with respect to the Y coordinate is multiplied by R/A, which is a correction value. That is:

$$R/A = R/(R^2 - H^2)^{1/2}$$

(2) Correction by the Position of the Laser Displacement Gauge 10

FIG. 5 is a plan view showing the positional relationship between the laser displacement gauge 10 and the tire T in the X-Y plane.

As shown in FIG. 5, where the movement coordinate of the bonding roller 3, that is, the laser displacement gauge 10, in the X-Y plane is $(X_1, Y_1)$, the inclination about the rotation axis (Z-axis) is $\theta$, and the coordinate of the position on the tire surface actually irradiated with the laser beam is $(X_2, Y_2)$, the following holds:

$$X_2 = X_1 - l \cdot \sin\theta, \quad Y_2 = Y_1 - l \cdot \cos\theta$$

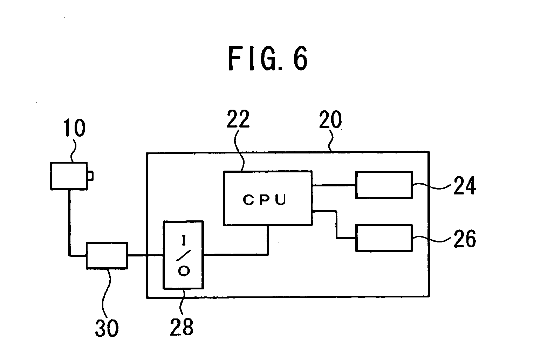

The tip of the laser displacement gauge 10 and the central portion of the bonding roller 3 move along the same coordinate. Therefore, if, for example, the control unit 20 (FIG. 6) instructs the bonding roller 3 to move to a coordinate $(X_1, Y_1, \theta)$, the bonding roller etc. are moved in the X-axis and Y-axis directions by the stepping motors M1 and M2 as shown in FIG. 1, according to the instruction, and are rotated about the rotation axis (Z-axis) by the angle $\theta$ from the Y-axis direction, according to the rotation angle $\theta$.

At this time, the coordinate of the measuring position on the tire surface, i.e., the coordinate $(X_2, Y_2)$, is calculated from the movement coordinate $(X_1, Y_1, \theta)$ of the bonding roller 3, that is, the laser displacement gauge 10.

By correcting the position of the laser displacement gauge 10 itself, the dimension A of the tire along the section P2 at the coordinate $(X_2, Y_2)$ is calculated, and the measurement data is enlarged by the enlargement ratio $R/A(R/(R^2-H^2)^{1/2})$ calculated from the radius R of the outer circumference of the tire and the difference in height H between the bonding roller 3 and the laser displacement gauge 10.

Thus, the correction by the position of the laser displacement gauge 10 and the correction according to the difference in height H between the measurement data are performed.

FIG. 6 is a schematic block diagram showing an example of a control unit.

The control unit 20 includes: a CPU 22 that performs arithmetic processing; a microcomputer having storage means 24 including a ROM for storing an arithmetic program and an operation control program of the laser displacement gauge 10, a RAM for temporarily storing data, and the like; display means 26 that displays data and the profile of the green tire resulting from the measurement if necessary; an interface 28 that takes in the measurement data through an amplifier 30 for amplifying the output of the laser displacement gauge 10 or communicates with an external device; and the like.

The control unit 20 calculates the profile of the green tire according to the data obtained from the laser displacement gauge 10 and performs, for example, correction of the coordinate of the measuring position of the green tire according to the coordinate of the position of the laser displacement gauge 10 and correction according to the difference in height H between the bonding roller 3 and the laser displacement gauge 10. Then, processing such as determination of whether or not the building is successful is performed by, for example, comparing the profile with a preliminarily stored reference pattern.

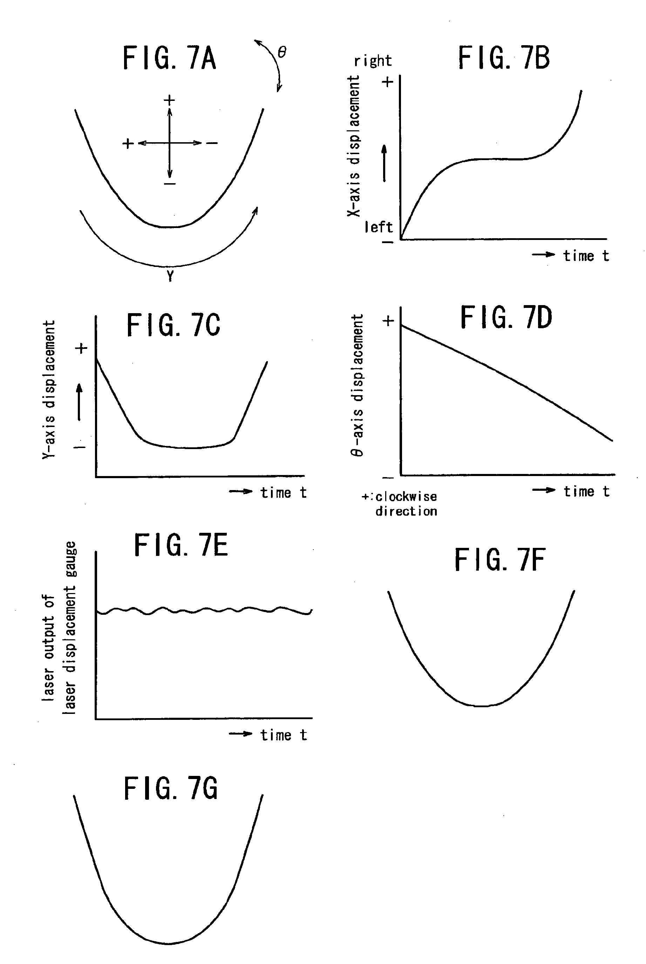

FIGS. 7 are diagrams for explaining tire measurement according to the above-described present embodiment.

FIG. 7A shows the profile of the laminated tire T according to the data measured by the reflection laser displacement gauge (distance meter) 10, in which an arrow Y indicates a movement path of the laser displacement gauge 10. That is, this shows that the laser displacement gauge 10 moves around the tire T from the left side to the right side in the drawing, while being controlled so as to rotate counterclockwise, such that a laser-emitting surface constantly faces the tire surface at a right angle.

That is, by driving the movable bases 5 and 7 and the swing base 8 shown in FIG. 1, measurement is performed in sequence from the left side surface, the surface, to the right side surface of the tire on the tire building drum 2.

FIG. 7B shows the measurement result of the laser displacement gauge 10 in the X-axis direction at this time. That is, this shows the relationship between time and distance over which the laser displacement gauge 10 moves along the X-axis. As shown in the drawing, the laser displacement gauge 10 moves at a higher speed relative to the right left side surfaces than relative to the surface. This is because, as a result of the bonding roller 3 moving at a constant speed parallel to the main axis of the building drum 2, i.e., along the X-axis, the relative speed of the laser displacement gauge 10 and the tire surface becomes relatively higher at the side portions than the front side.

FIG. 7C is a graph of the displacement data of the laser displacement gauge 10 in the Y-axis direction, i.e., a direction perpendicular to the building drum 2, versus time, in which the center of the circumference of the tire is shown on the plus side.

FIG. 7D is a graph of the rotation of the laser displacement gauge 10 versus time. This shows that, because the outer circumference of the tire is substantially arc-shaped in this embodiment, the laser displacement gauge 10 rotates counterclockwise along the outer circumference of the tire at a constant speed.

FIG. 7E shows the output of the laser displacement gauge 10, in which the output data of the laser displacement gauge 10 is plotted along the ordinate and the time is plotted along the abscissa.

FIG. 7F shows the profile of the tire synthesized according to the output data from the laser obtained from the values in the X-axis and Y-axis directions and the laser output data.

Furthermore, in this embodiment, correction of the position of the laser displacement gauge 10 itself and correction with respect to the attachment height H, that is, correction of the measurement data with respect to the Y coordinate, are performed. FIG. 7G shows the profile of the tire after the correction. This profile shows an estimated profile of the green tire obtained in the horizontal cross section cut at the same height as the center of the tire on the building drum 2.

The reason why the bonding roller 3 and the laser displacement gauge 10 are shifted from each other by the height H in this embodiment is because it is physically impossible to arrange the bonding roller 3 and the laser displacement gauge 10 at the same height. Therefore, the data measured by the laser displacement gauge 10 does not represent the actual profile at the position of the bonding roller 3, but represents one that is reduced in size in the Y-axis direction by the aforementioned ratio, as described above. In this embodiment, by correcting this, the data is converted into data at the time when the tire is cut along the horizontal plane passing through the center thereof.

In addition, the laser displacement gauge 10 serving as a sensor is not only capable of moving in the X-Y plane, but also capable of freely swinging in the aforementioned plane, that is, the laser displacement gauge 10 is capable of moving and changing orientation in the plane. Thus, the entire surface including the tire side surfaces can be measured.

Accordingly, precise shape data of the tire can be obtained while building the tire. By determining whether or not the profile is appropriate while building the tire and by coping with it, the occurrence of defects can be prevented.

Although, in the above-described embodiment, a case where a strip material is attached to a building drum has been described as an example, the strip material may be attached to a rigid core. Furthermore, although the laser displacement gauge is used as a sensor for measuring the shape of the tire, the sensor is not limited thereto. Various other known distance sensors, such as a sensor for detecting change in capacitance and a sensor using acoustic wave, may be used.

**Claims**

1. A method for measuring a surface of a tire formed by laminating a rubber strip (M) on a building support (2) comprising the steps of:

    bonding a rubber strip (M) on a building support (2) by a bonding roller (3) which is supported by support means so as to be freely movable in an X-Y plane including a main axis of the building support (2) and being defined by an X axis parallel to the main axis and a Y axis perpendicular to the X axis,
    measuring the profile of an entire surface of the tire including side surfaces parallel to the X-Y plane by a measuring means (10), the measuring means (10) being integrally attached to the bonding roller (3) and displaced therefrom in a Z axis direction perpendicular to the X-Y plane, the measuring means (10) moving in the X and Y axis directions and also rotating about the Z axis, so as to form a right angle with a surface of the tire; and
    correcting the resulting measurement data measured by the displacement measuring means (10), by a correction means, according to a difference between a laminating position on the tire building support (2) and a measuring position of the measuring device,
    wherein estimated surface shape data of the tire at the laminating position is obtained according to the corrected measurement data.

2. The method for measuring a tire according to claim 1,
    wherein the measurement of the tire surface is performed while the rubber strip (M) is bonded.

3. A tire measuring device for measuring a surface of a tire formed by laminating a rubber strip (M) on a building support (2) comprising:

    a bonding roller (3) for bonding a rubber strip (M), the bonding roller (3) being supported by support means so as to be freely movable in an X-Y plane including a main axis of the building support (2) and being defined by an X axis parallel to the main axis and a Y axis perpendicular to the X axis,
    a measuring means (10) for measuring the entire surface of the tire including side surfaces parallel to the X-Y plane, the measuring means (10) being integrally attached to the bonding roller (3) and displaced therefrom in a Z axis direction perpendicular to the X-Y plane, the measuring means (10) being moveable in the X and Y axis directions and also rotatable about the Z axis, so as to form a right angle with a surface of the tire; and
    correction means that corrects the measurement data measured by the displacement measuring means (10) according to a difference between a laminating position on the tire building support (2) and a measuring position of the measuring device,
    wherein estimated surface shape data of the tire at the laminating position is obtained according to the corrected measurement data.

4. The tire measuring device according to claim 3, further comprising means for determining whether or not the estimated surface shape data of the tire is appropriate by comparing the data with preliminarily stored normal tire surface data.

**5.** The tire measuring device according to claim 3 or 4,
wherein the measuring means (10) is a laser displacement gauge.

**6.** A tire building apparatus, comprising
a tire measuring device according to any one of claims 3 to 5, which is provided in a rubber-strip laminating device.

**Patentansprüche**

**1.** Verfahren zum Messen einer Reifenoberfläche, welche durch Laminieren eines Gummistreifens (M) auf einem Aufbauträger (2) geformt wird, umfassend die Schritte:

Kleben eines Gummistreifens (M) auf einem Aufbauträger (2) mittels einer Kleberolle (3), welche von Trägermitteln getragen wird, so dass sie in einer X-Y-Ebene frei beweglich ist, welche eine Hauptachse des Aufbauträgers (2) einschließt und durch eine zur Hauptachse parallelen X-Achse und eine zur X-Achse senkrechten Y-Achse definiert ist,
Messen des Profils einer gesamten Reifenoberfläche, einschließlich zur X-Y-Ebene paralleler Seitenflächen , mittels eines Messmittels (10), wobei das Messmittel (10) einstückig an der Kleberolle (3) befestigt und von dieser in Richtung einer zur X-Y-Ebene senkrechten Z-Achse verschoben ist, wobei das Messmittel (10) sich in Richtung der X und der Y-Achse bewegt und sich auch um die Z-Achse dreht, so dass ein rechter Winkel mit einer Oberfläche des Reifens gebildet wird; und
Korrigieren der sich ergebenden Messdaten, welche vom Verschiebungsmessmittel (10) gemessen werden, mittels eines Korrekturmittels, entsprechend einer Differenz zwischen einer Laminierposition auf dem Reifenaufbauträger (2) und einer Messposition der Messvorrichtung,
wobei geschätzte Oberflächenformdaten des Reifens in der Laminierposition entsprechend der korrigierten Messdaten erhalten werden.

**2.** Verfahren zur Reifenmessung nach Anspruch 1, wobei die Messung der Reifenoberfläche während des Klebens des Gummistreifens (M) ausgeführt wird.

**3.** Vorrichtung zur Reifenmessung zum Messen einer Oberfläche eines Reifens, welche durch Laminieren eines Gummistreifens (M) auf einem Aufbauträger (2) geformt wird, umfassend:

eine Kleberolle (3) zum Kleben eines Gummistreifens (M), wobei die Kleberolle (3) durch Trägermittel getragen wird, so dass sie in einer X-Y-Ebene frei beweglich ist, welche eine Hauptachse des Aufbauträgers (2) einschließt und durch eine zur Hauptachse parallelen X-Achse und eine zur X-Achse senkrechten Y-Achse definiert ist,
ein Messmittel (10) zum Messen der gesamten Reifenoberfläche, einschließlich zur X-Y-Ebene paralleler Seitenflächen, wobei das Messmittel (10) einstückig an der Kleberolle (3) befestigt und von dieser in der Richtung einer zur X-Y-Ebene senkrechten Z-Achse verschoben ist, wobei das Messmittel (10) in der Richtung der X- und der Y-Achse beweglich ist und sich auch um die Z-Achse dreht, so dass ein rechter Winkel mit einer Reifenoberfläche gebildet wird; und
ein Korrekturmittel, welches die vom Verschiebungsmessmittel (10) gemessenen Messdaten entsprechend einer Differenz zwischen einer Laminierposition auf dem Reifenaufbauträger (2) und einer Messposition der Messvorrichtung korrigieren,
wobei geschätzte Oberflächenformdaten des Reifens in der Laminierposition entsprechend der korrigierten Messdaten erhalten werden.

**4.** Vorrichtung zur Reifenmessung nach Anspruch 3, ferner umfassend ein Mittel zum Bestimmen, ob die geschätzten Oberflächenformdaten des Reifens angemessen sind, indem diese Daten mit im Vorab gespeicherten normalen Reifenoberflächendaten verglichen werden.

**5.** Vorrichtung zur Reifenmessung nach Anspruch 3 oder 4,
wobei das Messmittel (10) aus einem Laserverschiebungsmesser besteht.

**6.** Reifenaufbaugerät, umfassend
eine Vorrichtung zur Reifenmessung nach einem der Ansprüche 3 bis 5, welche in einer Gummistreifenlaminiervorrichtung vorgesehen ist.

**EP 2 085 745 B1**

**Revendications**

1. Procédé de mesure d'une surface d'un bandage pneumatique formé par stratification d'un ruban de caoutchouc (M) sur un support de construction (2), comprenant les étapes ci-dessous :

   collage d'un ruban de caoutchouc (M) sur un support de construction (2) par un rouleau de liaison (3), supporté par des moyens de support de sorte à pouvoir se déplacer librement dans un plan X-Y englobant un axe principal du support de construction (2), et défini par un axe X parallèle à l'axe principal et un axe Y perpendiculaire à l'axe X ;
   mesure du profil d'une surface entière du bandage pneumatique, y inclus des surfaces latérales parallèles au plan X-Y par un moyen de mesure (10), le moyen de mesure (10) étant fixé d'une seule pièce sur le rouleau de liaison (3) et étant déplacé par rapport à celui-ci dans une direction de l'axe Z perpendiculaire au plan X-Y, le moyen de mesure (10) se déplaçant dans la direction des axes X et Y et tournant également autour de l'axe Z, de sorte former un angle droit par rapport à une surface du bandage pneumatique ; et
   correction des données de mesure résultantes mesurées par le moyen de mesure à déplacement (10) par un moyen de correction, en fonction d'une différence entre une position de stratification sur le support de construction (2) du bandage pneumatique et une position de mesure du dispositif de mesure ;
   dans lequel des données estimées de la forme de surface du bandage pneumatique au niveau de la position de stratification sont obtenues sur la base des données de mesure corrigées.

2. Procédé de mesure d'un bandage pneumatique selon la revendication 1, dans lequel la mesure de la surface du bandage pneumatique est effectuée pendant le collage du ruban de caoutchouc (M).

3. Dispositif de mesure d'un bandage pneumatique pour mesurer une surface d'un bandage pneumatique formé par stratification d'un ruban de caoutchouc (M) sur un support de construction (2), comprenant :

   un rouleau de liaison (3) pour coller un ruban de caoutchouc (M), le rouleau de liaison (3) étant supporté par un moyen de support, de sorte à pouvoir se déplacer librement dans un plan X-Y englobant un axe principal du support de liaison (2), et défini par un axe X parallèle à l'axe principal et un axe Y perpendiculaire à l'axe X ,
   un moyen de mesure (10) pour mesurer la surface entière du bandage pneumatique, y inclus des surfaces latérales parallèles au plan X-Y, le moyen de mesure (10) étant fixé d'une seule pièce sur le rouleau de liaison (3) et étant déplacé par rapport à celui-ci dans une direction de l'axe Z perpendiculaire au plan X-Y, le moyen de mesure (10) pouvant être déplacé dans les directions des axes X et Y et pouvant également tourner autour de l'axe Z, de sorte à former un angle droit par rapport à la surface du bandage pneumatique ; et
   un moyen de correction, corrigeant les données de mesure, mesurées par le moyen de mesure à déplacement (10) sur la base d'une différence entre une position de stratification sur le support de construction (2) du bandage pneumatique et une position de mesure du dispositif de mesure ;
   dans lequel des données de la forme de surface estimées du bandage pneumatique au niveau de la position de stratification sont obtenues sur la base des données de mesure corrigées.

4. Dispositif de mesure d'un bandage pneumatique selon la revendication 3, comprenant en outre un moyen pour déterminer si les données de la forme de surface estimées du bandage pneumatique sont appropriées ou non, en comparant les données avec des données de la surface du bandage pneumatique normales enregistrées au préalable.

5. Dispositif de mesure d'un bandage pneumatique selon les revendications 3 ou 4, dans lequel le moyen de mesure (10) est une jauge à déplacement à laser.

6. Appareil de confection d'un bandage pneumatique, comprenant :

   un dispositif de mesure d'un bandage pneumatique selon l'une quelconque des revendications 3 à 5, agencé dans un dispositif de stratification d'un ruban de caoutchouc.

# FIG. 1

# FIG. 2A

# FIG. 2B

# FIG. 3A

# FIG. 3B

## FIG. 4

## FIG. 5

FIG. 6

FIG. 7A

$\theta$

+

+ ← → −

−

Y

FIG. 7B

right +

X-axis displacement

left −

→ time t

FIG. 7C

Y-axis displacement

+

−

→ time t

FIG. 7D

$\theta$-axis displacement

+

−

+:clockwise direction

→ time t

FIG. 7E

laser output of laser displacement gauge

→ time t

FIG. 7F

FIG. 7G

# FIG. 8A

# FIG. 8B

**EP 2 085 745 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004299184 A